# EUROPEAN PATENT APPLICATION

(11) **EP 2 378 687 A1**
(43) Date of publication of application: **19.10.2011**
(21) Application number: 10729207.0
(22) Date of filing: 06.01.2010
(51) Int. Cl.: H04J 11/00, H04B 1/40, H04B 1/707

(54) **RADIO BASE STATION APPARATUS AND WIRELESS COMMUNICATION METHOD**

(30) Priority: 07.01.2009 JP 2009002063
(71) Applicant: NTT DOCOMO, INC., Chiyoda-ku Tokyo 100-6150 (JP)
(72) Inventor: KAWAMURA, Teruo, Tokyo 100-6150 (JP); MIKI, Nobuhiko, Tokyo 100-6150 (JP); SAWAHASHI, Mamoru, Tokyo 100-6150 (JP)
(74) Representative: HOFFMANN EITLE
(86) International application number: PCT/JP2010/050044
(87) International publication number: WO 2010/079787

(57) **Abstract**

A radio base station apparatus and radio communication method are provided whereby reception characteristics do not deteriorate even when the number of multiplexed users of an uplink control channel signal is increased. The radio communication method of the present invention includes a transmission step of a mobile terminal apparatus transmitting an uplink control channel signal orthogonally multiplexed among users including reference signals, a receiving step of the radio base station apparatus receiving the uplink control channel signal and a demodulation step of demodulating the uplink control channel signal using maximum likelihood detection.

## Description

### Technical Field

The present invention relates to a radio base station apparatus and radio communication method in a next-generation mobile communication system.

### Background Art

Aiming at improvements in frequency utilization efficiency and data rates of a UMTS (Universal Mobile Telecommunications System) network, HSDPA (High Speed Downlink Packet Access) or HSUPA (High Speed Uplink Packet Access) is being adopted to make the most of features of a W-CDMA (Wideband Code Division Multiple Access)-based system. For this UMTS network, Long Term Evolution (LTE) is being studied for the purpose of achieving a faster data rate and lower delay or the like (Non-Patent Document 1). As a multiplexing scheme, LTE uses OFDMA (Orthogonal Frequency Division Multiple Access) which is different from W-CDMA for a downlink and uses SC-FDMA (Single Carrier Frequency Division Multiple Access) for an uplink.

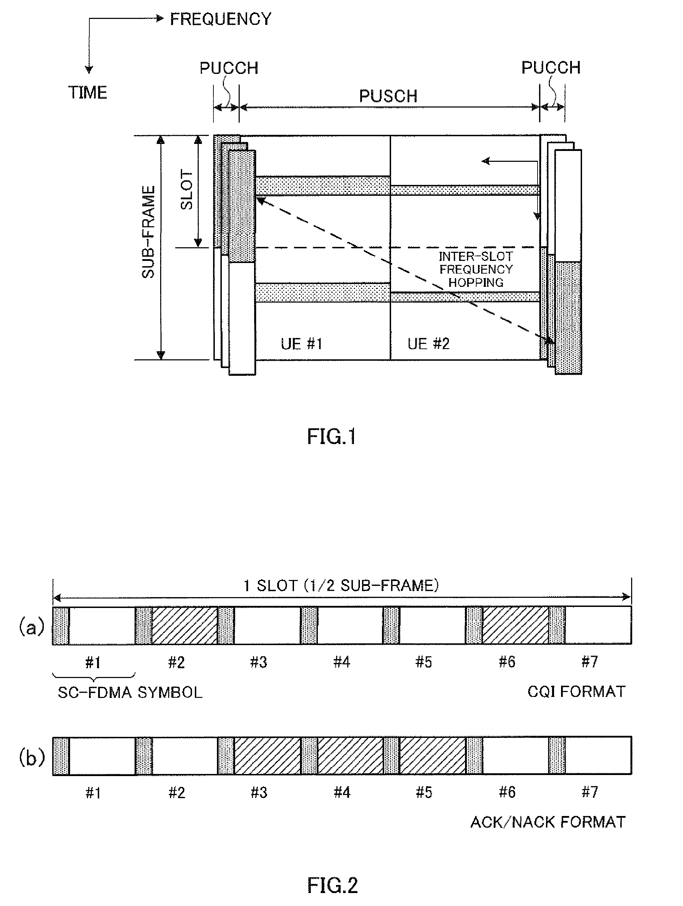

An uplink signal transmitted via an uplink is transmitted from a mobile terminal apparatus to a radio base station apparatus as shown in FIG. 1. In this case, user data (UE (User Equipment) #1, UE#2) is allocated to an uplink shared channel (PUSCH: Physical Uplink Shared Channel) and control information is allocated to an uplink control channel (PUCCH: Physical Uplink Control Channel). Quality information (CQI: Channel Quality Indicator) of the downlink and retransmission response (ACK/NACK) of a downlink shared channel or the like are transmitted through this uplink control channel.

PUCCH adopts a sub-frame configuration which differs between CQI and ACK/NACK (FIG.2). The sub-frame configuration shown in FIG.2 includes seven SC-FDMA symbols in one slot (1/2 sub-frame). Furthermore, one SC-FDMA symbol includes 12 information symbols (subcarriers). To be more specific, as shown in FIG. 2(a), in the sub-frame configuration of CQI (CQI format), a second symbol (#2) and a sixth symbol (#6) are multiplexed with reference signals (RS) in the slot and the other symbols (first symbol, third to fifth symbols and seventh symbol) are multiplexed with control information (CQI). On the other hand, as shown in FIG. 2(b), in the sub-frame configuration (ACK/NACK format) of ACK/NACK, third (#3) to fifth (#5) symbols are multiplexed with reference signals (RS) in the slot and the other symbols (first symbol (#1), second symbol (#2), sixth symbol (#6) and seventh symbol (#7)) are multiplexed with control information (ACK/NACK). The slot is repeated twice in one sub-frame. Furthermore, as shown in FIG. 1, frequency hopping is applied to two slots within one sub-frame.

When uplink control channel signals of a plurality of users are multiplexed in a PUCCH, the uplink control channel signals are orthogonally multiplexed so that the radio base station apparatus can separate the uplink control channel signals for different users. Examples of such an orthogonal multiplexing method include an orthogonal multiplexing method using a cyclic shift of a CAZAC (Constant Amplitude Zero Auto Correlation) code sequence and an orthogonal multiplexing method using block spreading.

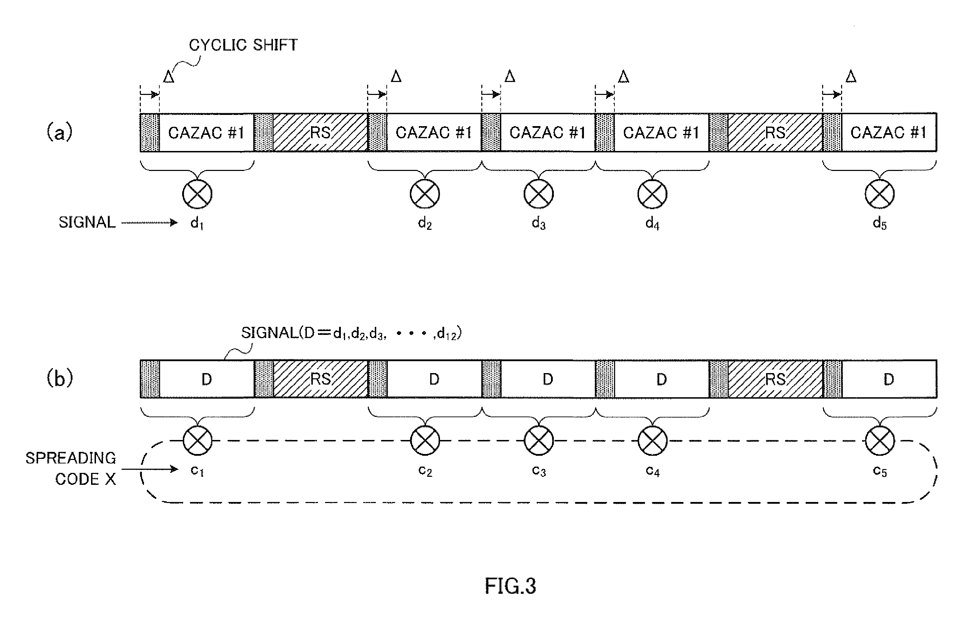

The orthogonal multiplexing method using a cyclic shift of a CAZAC code sequence is an orthogonal multiplexing method taking advantage of the fact that sequence CAZAC#1 (Δp) which is a CAZAC code sequence of a code length of L cyclically shifted by Δp and sequence CAZAC#1 (Δq) which is a CAZAC code sequence cyclically shifted by Δq are orthogonal to each other. Therefore, by modulating SC-FDMA symbols with which control information is multiplexed using a CAZAC code sequence of a different cyclic shift amount, this method causes uplink control channel signals to be orthogonally multiplexed for different users. For example, as shown in FIG. 3(a), an uplink control channel signal of the sub-frame configuration of CQI is modulated with a CAZAC code sequence having a specific cyclic shift amount (Δ). In this case, all SC-FDMA symbols d₁ to d₁₀ within the same sub-frame are modulated with the same CAZAC code sequence. By appling different cyclic shift amounts to different users and modulating the SC-FDMA symbols within the sub-frame with the CAZAC code sequence having a cyclic shift amount assigned to each user, it is possible to realize orthogonality among uplink control channel signals of the respective users. This allows the radio base station apparatus to separate uplink control channel signals on a user-by-user basis. The interval of cyclic shift of a CAZAC code sequence assigned to each user is preferably set to be longer than a maximum amount of delay of multipath.

The orthogonal multiplexing method using block spreading is an orthogonal multiplexing method using orthogonal codes. Therefore, this method applies spread spectrum modulation to SC-FDMA symbols using orthogonal codes and maps the spread signals to the SC-FDMA symbols. For example, as shown in FIG. 3 (b), the method applies spread spectrum modulation to CQI (control information) using spreading code X and maps spread signals c₁ to c₅ thereby obtained to the SC-FDMA symbols (first symbol, third symbol to fifth symbol and seventh symbol). In this case, 12 information symbols (D=d₁ to d₁₂) are multiplexed with one SC-FDMA symbol. This makes it possible to realize orthogonality among uplink control channel signals on a user-by-user basis and allows the radio base station apparatus to separate uplink control channel signals on a user-by-user basis.

### Citation List

### Non-Patent Literature

Non-Patent Literature 1: 3GPP, TR25.912 (V7.1.0), "Feasibility study for Evolved UTRA and UTRAN", Sep. 2006

### Summary of Invention

### Technical Problem

According to an orthogonal multiplexing method using cyclic shifts of a CAZAC code sequence, the number of multiplexed users is determined by the number of cyclic shifts within one SC-FDMA symbol, the number of multiplexed users is typically 6 and a maximum of 12. On the other hand, according to an orthogonal multiplexing method using block spreading, the number of multiplexed users is determined by the number of SC-FDMA symbols with which control information within one slot is multiplexed and the number of multiplexed users is a maximum of 5. In this way, according to the orthogonal multiplexing method using cyclic shifts of a CAZAC code sequence, it is basically assumed that the number of users that can be multiplexed can be increased by increasing the number of cyclic shifts.

However, in the case of the orthogonal multiplexing method using cyclic shifts of a CAZAC code sequence, when the delay spread is large relative to the cyclic shift length, a correlation between CAZAC code sequences increases and orthogonality is lost. For this reason, required average receiving power for satisfying required receiving quality on the radio base station apparatus side increases and its reception characteristic deteriorates.

The present invention has been implemented in view of the above described problems and it is an object of the present invention to provide a radio base station apparatus and radio communication method whose reception characteristic does not deteriorate even when the number of multiplexed users of an uplink control channel signal is increased.

### Solution to Problem

The radio base station apparatus of the present invention includes receiving section configured to receive an uplink control channel signal orthogonally multiplexed among users including reference signals and demodulation sectionconfigured to demodulate the uplink control channel signal using maximum likelihood detection.

The radio communication method of the present invention includes a transmission step of a mobile terminal apparatus transmitting an uplink control channel signal orthogonally multiplexed among users including reference signals, a reception step of a radio base station apparatus receiving the uplink control channel signal and a demodulation step of demodulating the uplink control channel signal using maximum likelihood detection.

### Technical Advantage of the Invention

According to the present invention, the mobile terminal apparatus transmits an uplink control channel signal orthogonally multiplexed among users including reference signals and the radio base station apparatus receives the uplink control channel signal, demodulates the uplink control channel signal using maximum likelihood detection, and therefore the reception characteristic does not deteriorate even when the number of multiplexed users of the uplink control channel signal is increased.

### Brief Description of Drawings

FIG. 1 is a diagram illustrating a configuration of an uplink signal;
FIGs. 2(a) and (b) are diagrams illustrating a sub-frame configuration of an uplink control channel signal;
FIG. 3 (a) is a diagram illustrating orthogonal multiplexing by cyclic shifts using a CAZAC code sequence and FIG. 3(b) is a diagram illustrating orthogonal multiplexing by block spreading;
FIG.4 is a diagram illustrating a schematic configuration of a radio base station apparatus according to Embodiment 1 of the present invention;
FIGs. 5(a) and (b) are diagrams illustrating a configuration of a maximum likelihood detection section of the radio base station apparatus;
FIG.6 is a diagram illustrating a schematic configuration of a mobile terminal apparatus according to Embodiment 1 of the present invention;
FIG.7 is a diagram illustrating a schematic configuration of a radio base station apparatus according to Embodiment 2 of the present invention;
FIG. 8 is a diagram illustrating a schematic configuration of a mobile terminal apparatus according to Embodiment 2 of the present invention;
FIG.9 is a diagram illustrating a schematic configuration of a radio base station apparatus according to Embodiment 3 of the present invention; and
FIG.10 is a diagram illustrating a schematic configuration of a mobile terminal apparatus according to Embodiment 3 of the present invention.

### Description of Embodiment

Hereinafter, embodiments of the present invention will be described in detail with reference to the accompanying drawings.

### (Embodiment 1)

The present embodiment will describe a case where uplink control information is user-multiplexed using an orthogonal multiplexing method using cyclic shifts of a CAZAC code sequence.

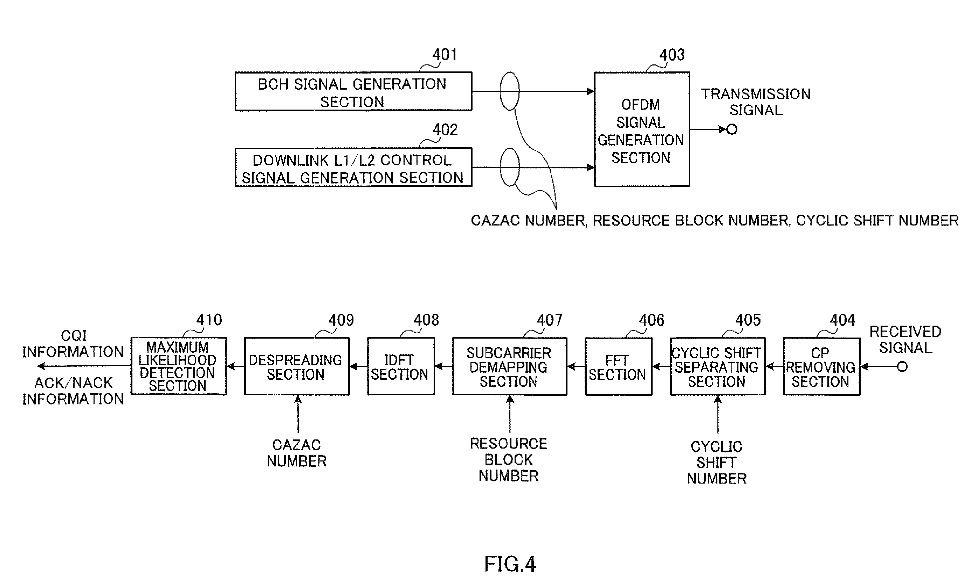

FIG.4 is a diagram illustrating a schematic configuration of a radio base station apparatus according to Embodiment 1 of the present invention. The radio base station apparatus shown in FIG. 4 is provided with a processing section of transmission system and a processing section of reception system. The processing section of transmission system includes a BCH signal generation section 401 that generates a BCH (Broadcast Channel) signal, a downlink L1/L2 control signal generation section 402 that generates a downlink control signal (L1 (layer 1)/L2 (layer 2) control signal) and an OFDM signal generation section 403 that multiplexes the BCH signal and downlink L1/L2 control signal to generate an OFDM signal.

The BCH signal generation section 401 generates a BCH signal including broadcast information to be broadcast from the radio base station apparatus. The BCH signal generation section 401 outputs the BCH signal to the OFDM signal generation section 403. The BCH signal includes a CAZAC number indicating a CAZAC code sequence, a resource block number indicating a resource block (RB) to which an uplink control channel is mapped and a cyclic shift number corresponding to a cyclic shift amount or the like.

The downlink L1/L2 control signal generation section 402 generates a downlink L1/L2 control signal to be transmitted through a downlink control channel (PDCCH: Physical Downlink Control Channel). The downlink L1/L2 control signal generation section 402 outputs the downlink L1/L2 control signal to the OFDM signal generation section 403 . The downlink L1/L2 control signal includes a CAZAC number indicating a CAZAC code sequence, a resource block number indicating a resource block (RB) to which the uplink control channel is mapped and a cyclic shift number corresponding to a cyclic shift amount or the like.

The CAZAC number, resource block number and cyclic shift number may also be transmitted to the mobile terminal apparatus through a BCH or may be transmitted to the mobile terminal apparatus through a PDCCH. Alternatively, the CAZAC number, resource block number and cyclic shift number may also be reported to the mobile terminal apparatus through a higher layer.

The OFDM signal generation section 403 applies discrete Fourier transform (DFT) to a downlink signal including at least the BCH signal and downlink L1/L2 control signal, maps the downlink signal to subcarriers, applies inverse fast Fourier transform (IFFT) thereto, adds a CP (Cyclic prefix) thereto and thereby generates a downlink OFDM signal.

The processing section of reception system includes a CP removing section 404 that removes a CP from a received signal, a cyclic shift separating section 405 that separates an orthogonally multiplexed received signal using a cyclic shift number, an FFT section 406 that applies fast Fourier transform (FFT) to the separated received signal, a subcarrier demapping section 407 that demaps the signal after the FFT, an IDFT section 408 that applies inverse discrete Fourier transform (IDFT) to the demapped signal, a despreading section 409 that dispreads the signal after the IDFT using a CAZAC number and a maximum likelihood detection section 410 that performs maximum likelihood detection using the despread signal.

The CP removing section 404 removes a portion corresponding to a CP from the received signal and extracts a valid signal portion. The CP removing section 404 outputs the signal after the CP removal to the cyclic shift separating section 405.

Using cyclic shift numbers, the cyclic shift separating section 405 separates the received signal orthogonally multiplexed using cyclic shifts. An uplink control channel signal from the mobile terminal apparatus is cyclically shifted by a cyclic shift amount which differs from one user to another. Therefore, by cyclically shifted in a reverse direction by the same cyclic shift amount as the cyclically shifted amount by the mobile terminal apparatus, it is possible to obtain an uplink control channel signal not cyclically shifted. The cyclic shift amount varies from one user to another and is associated with a cyclic shift number. For this reason, the cyclic shift separating section 405 applies the cyclic shift in the reverse direction using a cyclic shift amount corresponding to the cyclic shift number. In this way, it is possible to separate a signal (uplink control channel signal) of a user corresponding to the cyclic shift number. The cyclic shift separating section 405 outputs the separated signal to the FFT section 406.

The FFT section 406 applies FFT to the separated received signal to transform the signal to a frequency domain signal. The FFT section 406 outputs the signal after FFT to the subcarrier demapping section 407.

The subcarrier demapping section 407 extracts the uplink control channel signal from the frequency domain signal. The subcarrier demapping section 407 extracts the uplink control channel signal using a resource block number to which the uplink control channel signal is assigned. The subcarrier demapping section 407 outputs the extracted uplink control channel signal to the IDFT section 408.

The IDFT section 408 applies IDFT to the extracted uplink control channel signal to transform the signal into a time domain signal. Furthermore, the IDFT section 408 outputs the signal transformed into the time domain to the despreading section 409.

The despreading section 409 despreads the signal after IDFT using a CAZAC number. Therefore, the despreading section 409 identifies a CAZAC code sequence from the CAZAC number corresponding to the CAZAC code sequence, dispreads the signal after IDFT using the CAZAC code sequence and obtains an SC-FDMA symbol. The despreading section 409 outputs the obtained SC-FDMA symbol to the maximum likelihood detection section 410.

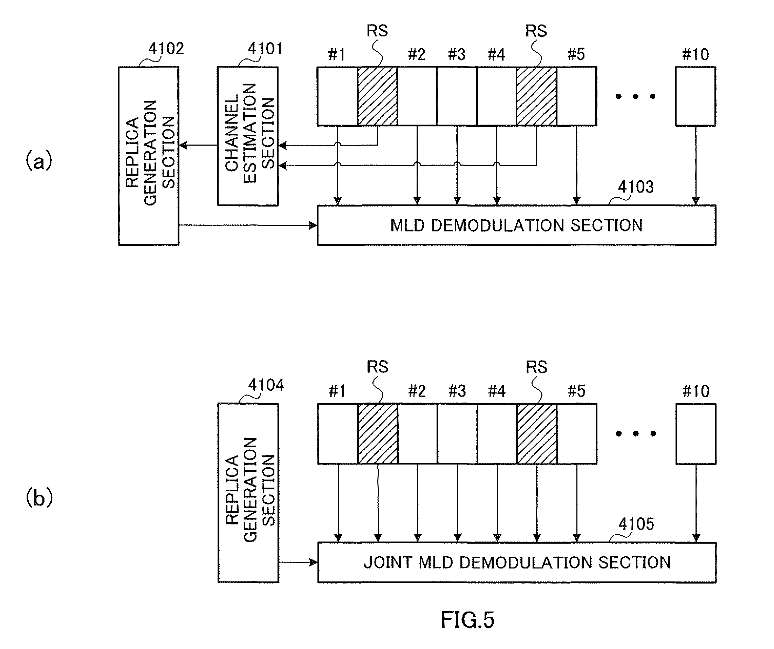

The maximum likelihood detection section 410 performs maximum likelihood detection (demodulation) on the signal after IDFT. The maximum likelihood detection section 410 performs maximum likelihood detection on the despread SC-FDMA symbol. As shown in FIG.5(a), the maximum likelihood detection section 410 includes a channel estimation section 4101 that performs channel estimation using reference signals (RS) included in the uplink control channel signal, a replica generation section 4102 that generates a symbol replica of the uplink control channel signal using the channel estimate value obtained in the channel estimation section 4101 and an MLD (Maximum Likelihood Detection) demodulation section 4103 that performs maximum likelihood detection between the symbol replica generated and the symbol of the uplink control channel signal (SC-FDMA symbol).

In the maximum likelihood detection section 410 in the configuration shown in FIG. 5(a), the channel estimation section 4101 obtains a channel estimate value (channel gain) using RSs. This channel estimate value is outputted to the replica generation section 4102. The replica generation section 4102 generates a symbol replica of each pattern from symbol phases of all patterns (2¹⁰ patterns) of SC-FDMA symbols (here 10 SC-FDMA symbols) and the channel estimate value obtained in the channel estimation section 4101. This symbol replica of each pattern is outputted to the MLD demodulation section 4103. The MLD demodulation section 4103 calculates a Euclidean distance between the received SC-FDMA symbols outputted from the despreading section 409 and the symbol replica, sums up all symbols using the calculated Euclidean distance as metrics and reproduces a symbol replica for which accumulated metrics become a minimum as a transmission bit sequence (control information).

The maximum likelihood detection section 410 may also have a configuration shown in FIG. 5 (b) . That is, the maximum likelihood detection section 410 includes a replica generation section 4104 that generates a symbol replica of the uplink control channel signal and a joint MLD demodulation section 4105 that performs channel estimation using reference signals included in the uplink control channel signal and performs maximum likelihood detection between the symbol replica and symbols of the uplink control channel signal.

In the maximum likelihood detection section 410 in the configuration shown in FIG. 5(b), the replica generation section 4104 generates symbol replicas of all patterns (2¹⁰ patterns) of SC-FDMA symbols (here, 10 SC-FDMA symbols). This symbol replica of eachpattern is outputted to the joint MLD demodulation section 4105. The joint MLD demodulation section 4105 performs in-phase averaging on a correlation between the received SC-FDMA symbols outputted from the despreading section 409 and the symbol replica over 7 symbol segments including RSs belonging to the respective slots. The joint MLD demodulation section 4105 then performs power averaging on the correlation value after the in-phase averaging over two slot segments. Suchpower averaging is performed because frequency hopping is applied. A symbol replica that gives a largest correlation peak after the power averaging is reproduced as a transmission bit sequence (control information).

By performing maximum likelihood detection in this way, a CQI (Channel Quality Indicator) bit sequence which is a transmission bit sequence (control signal) or ACK/NACK bit is obtained.

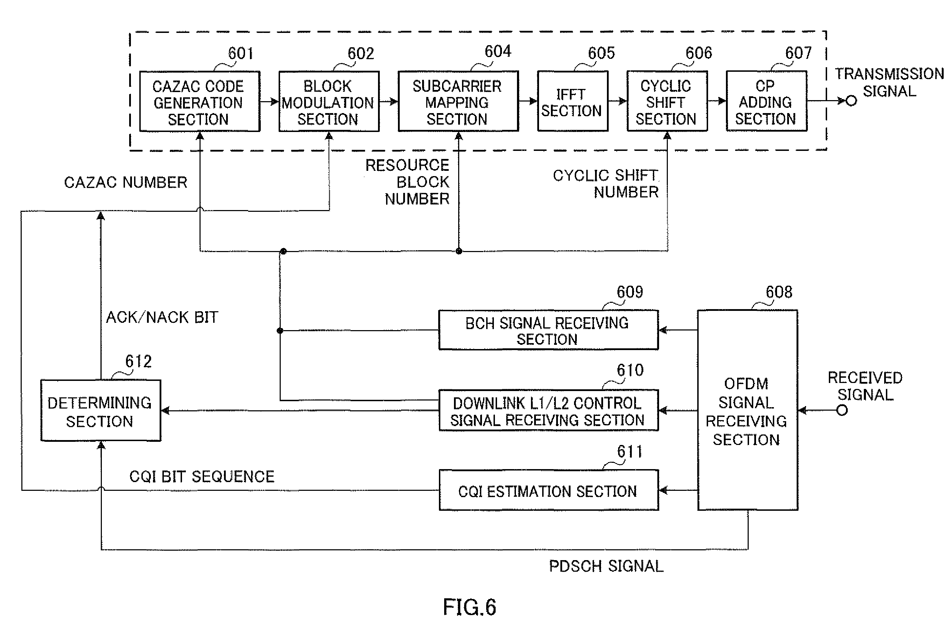

FIG.6 is a diagram illustrating a schematic configuration of a mobile terminal apparatus according to Embodiment 1 of the present invention. The mobile terminal apparatus shown in FIG. 6 is provided with a processing section of transmission system and a processing section of reception system. The processing section of transmission system includes a CAZAC code generation section 601 that generates a CAZAC code sequence corresponding to a CAZAC number, a block modulation section 602 that modulates every predetermined number of symbols (block) using the CAZAC code sequence, a subcarrier mapping section 604 that maps the signal after the block modulation to subcarriers, an IFFT section 605 that applies inverse fast Fourier transform (IFFT) to the mapped signal, a cyclic shift section 606 that applies a cyclic shift to the signal after the IFFT and a CP adding section 607 that adds a CP to the cyclically shifted signal.

The CAZAC code generation section 601 prepares a CAZAC code sequence corresponding to a CAZAC number assigned to the user. The CAZAC code generation section 601 outputs the prepared CAZAC code sequence to the block modulation section 602.

The block modulation section 602 modulates every predetermined number of symbols (block) using the CAZAC code sequence. That is, assuming a predetermined number of SC-FDMA symbols as one block, the block modulation section 602 performs modulation on this unit block using the CAZAC code sequence. To be more specific, individual SC-FDMA symbols are multiplied by individual codes of the CAZAC code sequence. The block modulation section 602 outputs the block modulated signal to the subcarrier mapping section 604.

The subcarriermapping section 604 maps a frequency domain signal to a subcarrier. Using a resource block number to which the uplink control channel signal is assigned, the subcarrier mapping section 604 maps the uplink control channel signal to a subcarrier of a resource block having the resource blocknumber. The subcarrier mapping section 604 outputs the mapped uplink control channel signal to the IFFT section 605.

The IFFT section 605 applies IFFT to the mapped signal to transform the signal into a time domain signal. The IFFT section 605 outputs the signal after the IFFT to the cyclic shift section 606.

The cyclic shift section 606 shifts the time domain signal by a predetermined cyclic shift amount. The order of the SC-FDMA symbols included in the unit block is shifted by this cyclic shift. The cyclic shift amount differs from one user to another and is associated with the cyclic shift number. The cyclic shift section 606 outputs the cyclically shifted signal to the CP adding section 607.

CP adding section 607 adds a CP to the cyclically shifted signal. A transmission signal including the uplink control channel signal is thereby generated.

The processing section of reception system includes an OFDM signal receiving section 608 that receives an OFDM signal, a BCH signal receiving section 609 that receives a BCH signal, a downlink L1/L2 control signal receiving section 610 that receives a downlink control signal (L1/L2 control signal), a CQI estimation section 611 that estimates CQI using reference signals included in the Downlink signal and a determining section 612 that determines whether or not the received downlink shared data channel signal has been received without errors.

The OFDM signal receiving section 608 receives a downlink OFDM signal and separates the downlink OFDM signal into signals of their respective channels. That is, the OFDM signal receiving section 608 removes a CP from the downlink OFDM signal, applies fast Fourier transform, performs demapping from subcarriers and performs inverse discrete Fourier transform. This received signal is outputted to the BCH signal receiving section 609 and the downlink L1/L2 control signal receiving section 610. Furthermore, the reference signals are outputted to the CQI estimation section 611 and the downlink shared data channel signal is outputted to the determining section 612.

The BCH signal receiving section 609 receives a BCH signal including broadcast information to be broadcast from the radio base station apparatus. When this BCH signal includes a CAZAC number indicating a CAZAC code sequence, a resource block number indicating a resource block (RB) to which an uplink control channel is mapped and a cyclic shift number corresponding to the cyclic shift amount, the BCH signal receiving section 609 outputs the CAZAC number to the CAZAC code generation section 601, outputs the resource block number to the subcarrier mapping section 604 and outputs the cyclic shift number to the cyclic shift section 606.

The downlink L1/L2 control signal receiving section 610 receives the downlink L1/L2 control signal transmitted through the downlink control channel. When the downlink L1/L2 control signal includes a CAZAC number indicating a CAZAC code sequence, a resource block number indicating a resource block (RB) to which the uplink control channel is mapped and a cyclic shift number corresponding to the cyclic shift amount or the like, the BCH signal receiving section 609 outputs the CAZAC number to the CAZAC code generation section 601, outputs the resource block number to the subcarrier mapping section 604 and outputs the cyclic shift number to the cyclic shift section 606.

The CQI estimation section 611 estimates CQI used for scheduling or adaptive control in the radio base station apparatus using reference signals and generates a CQI bit sequence. The CQI estimation section 611 outputs the CQI bit sequence to the block modulation section 602.

The determining section 612 determines whether or not the received downlink shared data channel signal (PDSCH signal) has been received without errors or even when there is an error, whether or not the error is within an allowable range and outputs the determination result. The determination result is expressed with acknowledgement information indicating an affirmative response (ACK bit) or negative response (NACK bit) . The determining section 612 outputs the ACK/NACK bit to the block modulation section 602.

A radio communication method according to the present invention using the radio base station apparatus and the mobile terminal apparatus in the above described configuration will be described. In the radio communication method according to the present invention, the mobile terminal apparatus transmits an uplink control channel signal including reference signals orthogonally multiplexed among users, the radio base station apparatus receives the uplink control channel signal and demodulates the uplink control channel signal using maximum likelihood detection. A case will be described here where CQI information having the sub-frame configuration shown in FIG. 2(a) is transmitted as control information through an uplink control channel.

First, the BCH signal generation section 401 of the radio base station apparatus generates a BCH signal including a CAZAC number, resource block number and cyclic shift number. This BCH signal is broadcast to the mobile terminal apparatus by OFDM signal generation section 403 as a downlink OFDM signal. In the mobile terminal apparatus, when the OFDM receiving section 608 receives the downlink OFDM signal, the BCH signal receiving section 609 extracts the CAZAC number, resource block number and cyclic shift number, outputs the CAZAC number to the CAZAC code generation section 601, outputs the resource block number to the subcarrier mapping section 604 and outputs the cyclic shift number to the cyclic shift section 606.

The CAZAC code generation section 601 of the mobile terminal apparatus prepares a CAZAC code sequence corresponding to the CAZAC number and the block modulation section 602 modulates CQI information which is control information with the CAZAC code sequence. This CQI information is a CQI bit sequence estimated by CQI estimation section 611 using reference signals included in the downlink signal.

Next, the subcarrier mapping section 604 maps block-modulated signals to subcarriers corresponding to respective resource block numbers and the IFFT section 605 applies IFFT to the mapped signal to transform the signal into a time domain signal.

Next, the cyclic shift section 606 applies a cyclic shift corresponding to the cyclic shift number to the signal after the IFFT. In this case, since different cyclic shifts are applied to different users, control information (CQI information) is orthogonally multiplexed among users. Next, the CP adding 607 adds a CP to the cyclically shifted signal and this signal is transmitted to the radio base stationapparatus as an uplink control channel signal.

The radio base station apparatus receives the uplink control channel signal orthogonally multiplexed among users and the CP removing section 404 removes the CP from the received signal. Next, the cyclic shift separating section 405 applies the cyclic shift amount corresponding to the cyclic shift number to the signal after the CP removal in the direction opposite to the direction in which the cyclic shift is applied in the mobile terminal apparatus. An uplink control channel signal not cyclically shifted is thereby obtained. Next, the FFT section 406 applies FFT to the user-separated signal to transform the signal into a frequency domain signal, the subcarrier demapping section 407 performs demapping from a subcarrier corresponding to the resource block number and the IDFT section 408 applies IDFT to the demapped signal to transform the signal into a time domain signal.

Next, the despreading section 409 despreads the signal after the IDFT using the CAZAC code sequence corresponding to the CAZAC number and obtains received SC-FDMA symbols. Next, the maximum likelihood detection section 410 performs maximum likelihood detection on the received SC-FDMA symbols and reproduces the most likely CQI information. The radio base station apparatus performs scheduling or adaptive control using the reproduced CQI information.

Thus, by applying maximum likelihood detection to the uplink control channel signal orthogonally multiplexed using the cyclic shift of the CAZAC code sequence, it is possible to prevent the reception characteristics from deteriorating even when the number of multiplexed users is increased in an environment in which the delay spread is greater than the length of cyclic shift. A case has been described above where control information is CQI information, but the present invention is likewise applicable to a case where the control information is ACK/NACK information which is retransmission necessity/unnecessity determination result of a PDSCH signal.

### (Embodiment 2)

The present embodiment will describe a case where uplink control information is user-multiplexed according to an orthogonal multiplexing method using block spreading.

Embodiment 1 has described a case with an orthogonal multiplexing method using a cyclic shift of a CAZAC code sequence, but the technical thought of the present invention is also applicable to a case where uplink control information is user-multiplexed according to the orthogonal multiplexing method using block spreading.

When transmitting multi-bit information, a large coding gain of error correcting coding is generally preferable from the standpoint of widening coverage of a cell. This is because when the error correcting coding gain is large, transmission power necessary to achieve required quality can be reduced. In the case of the orthogonal multiplexing method using the CAZAC code sequence in Embodiment 1, the channel coding rate when information bits transmitted in one sub-frame are assumed to be 10 bits depends on the number of SC-FDMA symbols with which information data within one slot is multiplexed. For example, in the sub-frame configuration shown in FIG.2, the channel coding rate becomes R=10/(5×2 (number of slots)x2(QPSK))=1/2. On the other hand, in the case of the orthogonal multiplexing method using block spreading, the channel coding rate depends on the number of information symbols within one SC-FDMA symbol. For example, in the sub-frame configuration shown in FIG. 2, the channel coding rate becomes R=10/{12×2(number of slots)×2(QPSK)}=5/24. Thus, from the standpoint of coding gain (or standpoint of improving reliability), the orthogonal multiplexing method using block spreading is more advantageous.

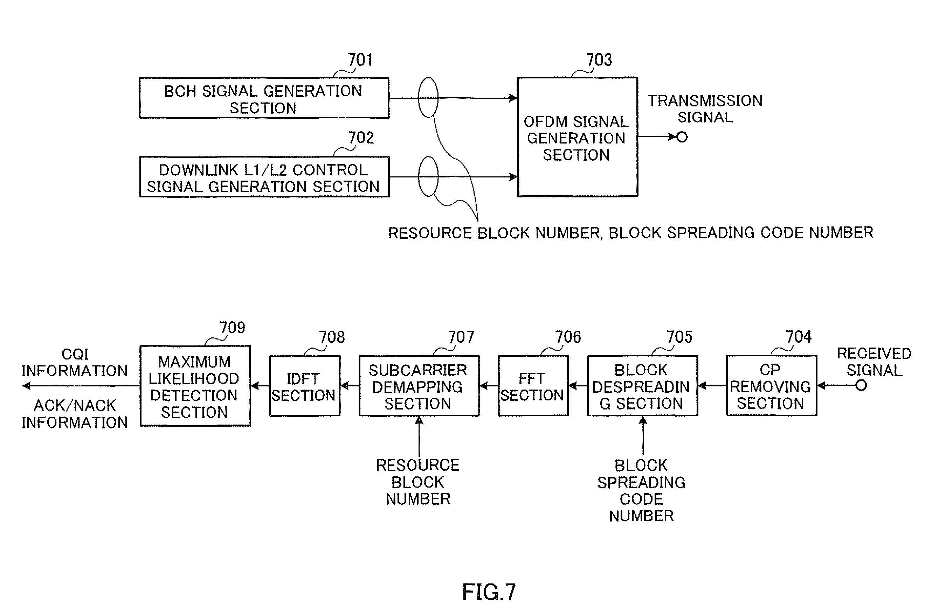

FIG.7 is a diagram illustrating a schematic configuration of a radio base station apparatus according to Embodiment 2 of the present invention. The radio base station apparatus shown in FIG. 7 is provided with a processing section of transmission system and a processing section of reception system. The processing section of transmission system includes a BCH signal generation section 701 that generates a BCH signal, a downlink L1/L2 control signal generation section 702 that generates a downlink control signal (L1/L2 control signal) andanOFDM signal generation section 703 that multiplexes the BCH signal and downlink L1/L2 control signal to generate an OFDM signal. Since the BCH signal generation section 701, downlink L1/L2 control signal generation section 702 and OFDM signal generation section 703 are identical to the BCH signal generation section 401, downlink L1/L2 control signal generation section 402 and OFDM signal generation section 403 of Embodiment 1, detailed descriptions thereof will be omitted.

The processing section of reception system includes a CP removing section 704 that removes a CP from a received signal, a block despreading section 705 that dispreads the orthogonally multiplexed received signal with a spreading code corresponding to a block spreading code number, an FFT section 706 that applies FFT to the despread signal, a subcarrier demapping section 707 that demaps the signal after the FFT, an IDFT section 708 that applies IDFT to the demapped signal and a maximum likelihood detection section 709 that performs maximum likelihood detection using the signal after the IDFT. Since the CP removing section 704, FFT section 706, subcarrier demapping section 707, IDFT section 708 and maximum likelihood detection section 709 are identical to the CP removing section 404, FFT section 406, subcarrier demapping section 407, IDFT section 408 and maximum likelihood detection section 410 in Embodiment 1, detailed descriptions thereof will be omitted.

Using a block spreading code number, the block despreading section 705 separates the received signal orthogonally multiplexed using a block spreading code. The uplink control channel signal from the mobile terminal apparatus is subjected to spread spectrum modulation using different block spreading codes for different users. Therefore, it is possible to obtain anuplink control channel signal not subj ected to spread spectrum modulation by despreading the signal with the same block spreading code as the block spreading code used for spread spectrum modulation in the mobile terminal apparatus. The block spreading code differs from one user to another and is associated with a block spreading code number. For this reason, the block despreading section 705 performs despreading using a block spreading code corresponding to the block spreading code number. This allows a signal (uplink control channel signal) of a user corresponding to the block spreading number to be separated. The block despreading section 705 outputs the separated signal to the FFT section 706.

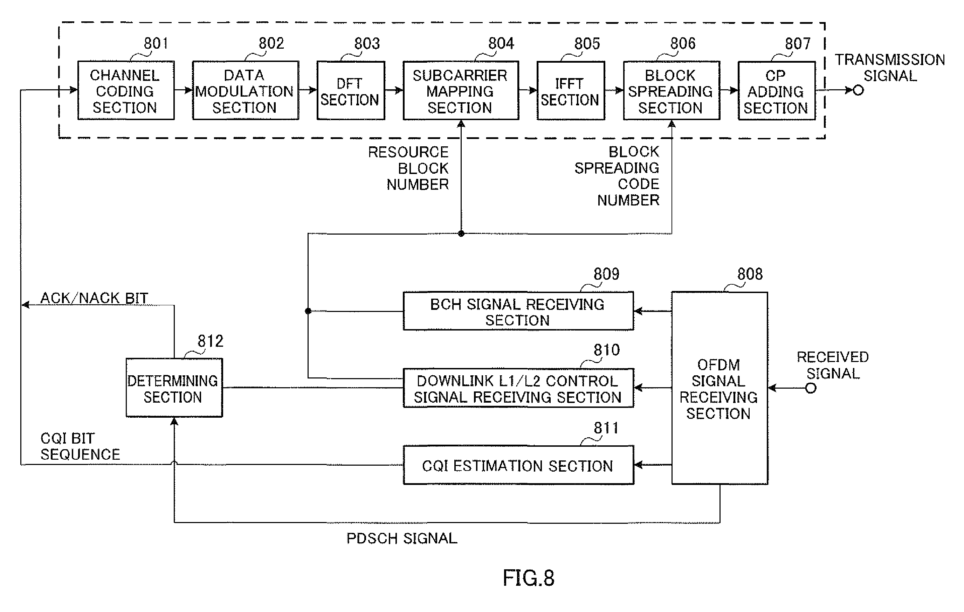

FIG.8 is a diagram illustrating a schematic configuration of a mobile terminal apparatus according to Embodiment 2 of the present invention. The mobile terminal apparatus shown in FIG. 8 is provided with a processing section of transmission system and a processing section of reception system. The processing section of transmission system includes a channel coding section 801 that performs channel coding on control information, a data modulation section 802 that data-modulates the signal after the channel coding, a DFT section 803 that transforms (applies DFT to) the signal after the data modulation to a frequency domain signal, a subcarrier mapping section 804 that maps the signal after the DFT to subcarriers, an IFFT section 805 that applies IFFT to the mapped signal, a block spreading section 806 that performs block spread spectrum modulation on the signal after the IFFT and a CP adding section 807 that adds a CP to the block-spread signal. Since the subcarrier mapping section 804, IFFT section and CP adding section 807 are identical to the subcarrier mapping section 604, IFFT section 605 and CP adding section 607 in Embodiment 1, detailed descriptions thereof will be omitted.

The channel coding section 801 performs error correcting coding on a bit sequence representing control information. The channel coding section 801 outputs the signal after the error correcting coding to the data modulation section 802. The data modulation section 802 data-modulates the bit sequence after the error correcting coding. The data modulation section 802 outputs the data-modulated signal to the DFT section 803. The channel coding scheme and data modulation scheme are reported from the radio base station apparatus beforehand.

The block spreading section 806 performs spread spectrum modulation on the time domain signal using a block spreading code. The block spreading code differs from one user to another and is associated with a block spreading code number. The block spreading section 806 outputs the signal subjected to spread spectrum modulation to the CP adding section 807.

The processing section of reception system includes an OFDM signal receiving section 808 that receives an OFDM signal, a BCH signal receiving section 809 that receives a BCH signal, a downlink L1/L2 control signal receiving section 810 that receives a downlink control signal (L1/L2 control signal), a CQI estimation section 811 that estimates CQI using reference signals included in a downlink signal and a determining section 812 that determines whether or not the received downlink shared data channel signal has been received without errors. Since the OFDM receiving section 808, BCH signal receiving section 809, downlink L1/L2 control signal receiving section 810, CQI estimation section 811 and determining section 812 are identical to the OFDM receiving section 608, BCH signal receiving section 609, downlink L1/L2 control signal receiving section 610, CQI estimation section 611 and determining section 612 in Embodiment 1 respectively, detailed descriptions thereof will be omitted.

The radio communication method according to the present invention using the radio base station apparatus and the mobile terminal apparatus in the above described configuration will be described. Here, a case will be described where CQI information having the sub-frame configuration shown in FIG. 2 (a) is transmitted over an uplink control channel as control information.

First, the BCH signal generation section 701 of the radio base station apparatus generates a BCH signal including a resource block number and block spreading code number. This BCH signal is broadcast to the mobile terminal apparatus by the OFDM signal generation section 703 as a downlink OFDM signal. In the mobile terminal apparatus, when the OFDM receiving section 808 receives a downlink OFDM signal, the BCH signal receiving section 809 extracts the resource block number and block spreading code number, outputs the resource block number to the subcarrier mapping section 804 and outputs the block spreading code number to the block spreading section 806.

In the mobile terminal apparatus, the channel coding section 801 applies error correcting coding to CQI information which is control information and the data modulation section 802 performs data modulation. This CQI information is a CQI bit sequence estimated by the CQI estimation section 811 using reference signals included in the downlink signal.

Next, the DFT section 803 applies DFT to the modulated signal to transform the signal into a frequency domain signal, the subcarrier mapping section 804 maps the signal after the DFT to a subcarrier corresponding to the resource block number and the IFFT section 805 applies IFFT to the mapped signal to transform the signal into a time domain signal.

Next, the block spreading section 806 applies spread spectrum modulation to the signal after the IFFT using a block spreading code. In this case, since different block spreading codes are used for different users, control information (CQI information) is orthogonally multiplexed among users. Next, the CP adding 807 adds a CP to the signal subjected to block spread spectrum modulation and this signal is transmitted to the radio base station apparatus as an uplink control channel signal.

The radio base station apparatus receives the uplink control channel signal orthogonally multiplexed among users and the CP removing section 704 removes the CP from the received signal. Next, the block despreading section 705 despreads the signal after the CP removal using a block spreading code corresponding to the block spreading code number. Thus, an uplink control channel signal not subj ected to block spread spectrum modulation is obtained. Next, the FFT section 706 applies FFT to the user-separated signal to transform the signal into a frequency domain signal, the subcarrier demapping section 707 performs demapping from a subcarrier corresponding to the resource block number and the IDFT section 708 applies IDFT to the demapped signal to obtain time domain reception SC-FDMA symbols. Next, the maximum likelihood detection section 709 performs maximum likelihood detection on the reception SC-FDMA symbols to reproduce the most likely CQI information. The radio base station apparatus performs scheduling and adaptive control using the reproduced CQI information.

Thus, maximum likelihood detection is also applicable to the uplink control channel signal orthogonally multiplexed using block spreading. In this case, it is possible to increase the coding gain and reduce transmission power necessary to achieve required quality. A case has been described above where control information is CQI information, but the present invention is likewise applicable to a case where control information is ACK/NACK information which is a retransmission necessity/unnecessity determination result of a PDSCH signal.

### (Embodiment 3)

The present embodiment will describe a case where uplink control information is user-multiplexed by switching between an orthogonal multiplexing method using a cyclic shift of a CAZAC code sequence and an orthogonal multiplexing method using block spreading.

In an environment in which a delay spread is relatively small, orthogonal multiplexing using block spreading has a large coding gain, and can thereby reduce required receiving power to satisfy required receiving quality compared to orthogonal multiplexing using a cyclic shift. On the other hand, in an environment in which the delay spread is relatively large, orthogonal multiplexing using a cyclic shift can reduce required receiving power to satisfy required receiving quality compared to orthogonal multiplexing using the block spreading. This is because while orthogonal multiplexing using the block spreading realizes orthogonality in slot units, orthogonal multiplexing using a cyclic shift realizes orthogonality in SC-FDMA symbol units.

Thus, the present embodiment will describe a case where the delay spread is determined and the orthogonal multiplexing method for an uplink control channel signal is switched according to the determination result. That is, the orthogonal multiplexing method using block spreading is applied when the delay spread is small and the orthogonal multiplexing method using a cyclic shift is applied when the delay spread is large.

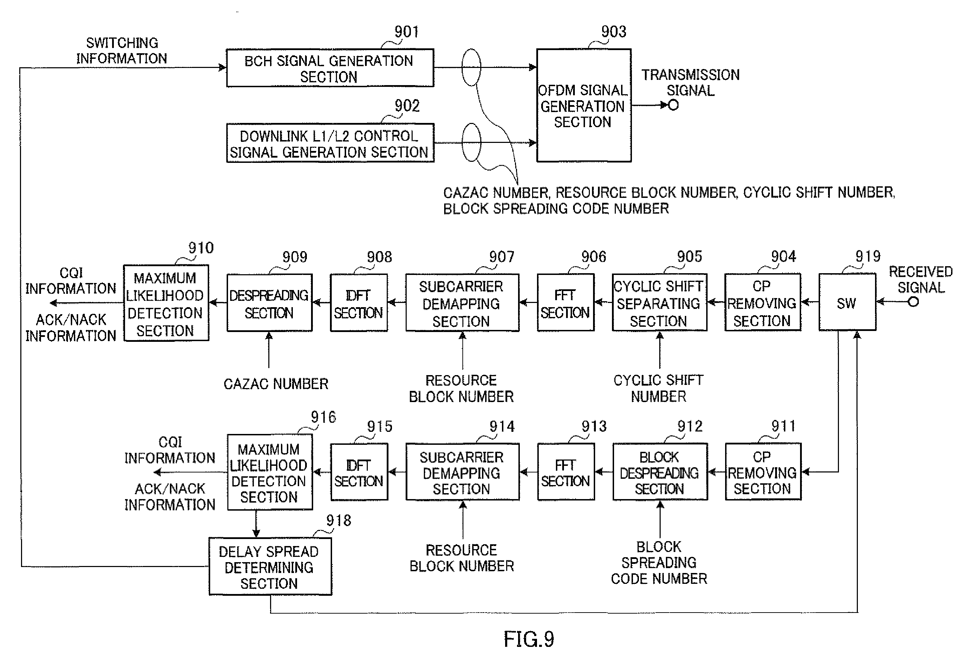

FIG.9 is a diagram illustrating a schematic configuration of a radio base station apparatus according to Embodiment 3 of the present invention. The radio base station apparatus shown in FIG. 9 is provided with a processing section of transmission system and a processing section of reception system. The processing section of transmission system includes a BCH signal generation section 901 that generates a BCH signal, a downlink L1/L2 control signal generation section 902 that generates a downlink control signal (L1/L2 control signal) and an OFDM signal generation section 903 that multiplexes the BCH signal and downlink L1/L2 control signal to generate an OFDM signal. Since the BCH signal generation section 901, downlink L1/L2 control signal generation section 902 and OFDM signal generation section 903 are identical to the BCH signal generation section 401, downlink L1/L2 control signal generation section 402 and OFDM signal generation section 403 in Embodiment 1, detailed descriptions thereof will be omitted.

The sequence of orthogonal multiplexing using a cyclic shift of the processing section of reception system includes a CP removing section 904 that removes a CP from a received signal, a cyclic shift separating section 905 that separates the orthogonally multiplexed received signal using a cyclic shift number, an FFT section 906 that applies FFT to the separated received signal, a subcarrier demapping section 907 that demaps the signal after the FFT, an IDFT section 908 that applies IDFT to the demapped signal, a despreading section 909 that performs despreading on the signal after the IDFT using a CAZAC number and a maximum likelihood detection section 910 that performs maximum likelihood detection using the despread signal. Since the CP removing section 904, cyclic shift separating section 905, FFT section 906, subcarrier demapping section 907, IDFT section 908, despreading section 909 and maximum likelihood detection section 910 are identical to the CP removing section 404, cyclic shift separating section 405, FFT section 406, subcarrier demapping section 407, IDFT section 408, despreading section 409 and maximum likelihood detection section 410 of Embodiment 1 respectively, detailed descriptions thereof will be omitted.

The sequence of orthogonal multiplexing using block spreading of the processing section of reception system includes a CP removing section 911 that removes a CP from a received signal, a block despreading section 912 that despreads the orthogonally multiplexed received signal using a spreading code corresponding to a block spreading code number, an FFT section 913 that applies FFT to the despread signal, a subcarrier demapping section 914 that demaps the signal after the FFT, an IDFT section 915 that applies IDFT to the demapped signal and a maximum likelihood detection section 916 that performs maximum likelihood detection using the signal after the IDFT. Since the CP removing section 911, block despreading section 912, FFT section 913, subcarrier demapping section 914, IDFT section 915 and maximum likelihood detection section 916 are identical to the CP removing section 704, block despreading section 705, FFT section 706, subcarrier demapping section 707, IDFT section 708 and maximum likelihood detection section 709 in Embodiment 2 respectively, detailed descriptions thereof will be omitted.

The radio base station apparatus is provided with a delay spread determining section 918 that detects a delay spread and determines the level of the delay spread and a SW 919 that switches the processing section of reception system according to the level determination result of the delay spread. Here, as for the delay spread, the delay spread is detected using a reference signal included in an uplink signal and the level of the delay spread is determined through a comparison with a predetermined threshold. The information of the determination result, that is, switching information is outputted to the SW 919 and used as information for switching the processing section of reception system (orthogonally multiplexed sequence using a cyclic shift, orthogonally multiplexed sequence using block spreading). The separation scheme for the orthogonally multiplexed uplink control channel signal is thereby switched. The processing by the respective processing sections of reception system is the same as that of Embodiments 1 and 2.

Furthermore, the information of this determination result is included in a BCH signal, reported to the mobile terminal apparatus and used as information for switching the processing section of transmission system. This switching information may also be reported to the mobile terminal apparatus through a downlink L1/L2 control channel or may be reported to the mobile terminal apparatus via a higher layer.

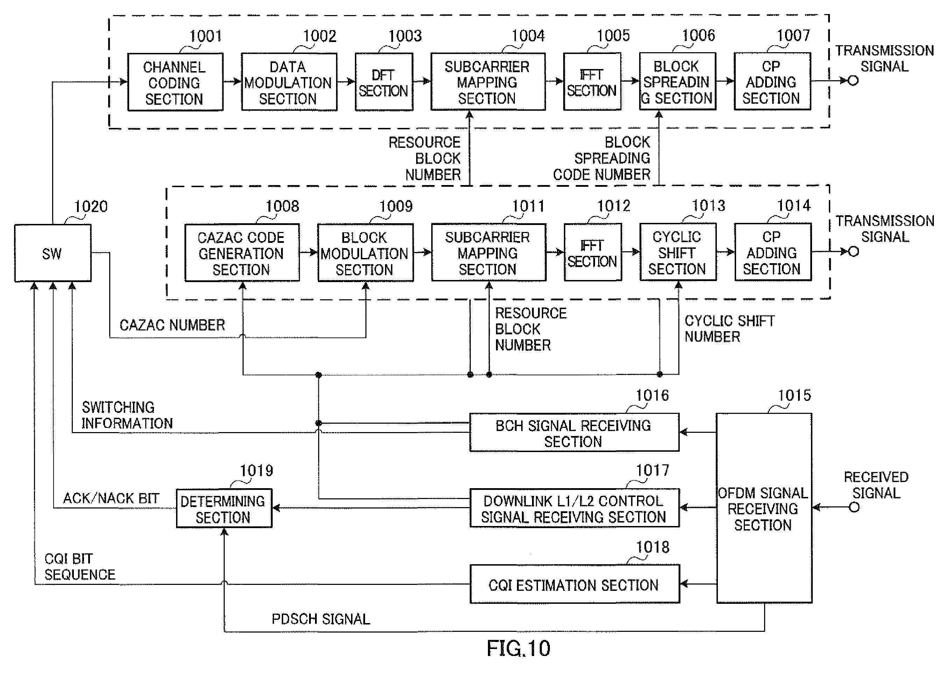

FIG.10 is a diagram illustrating a schematic configuration of a mobile terminal apparatus according to Embodiment 3 of the present invention. The mobile terminal apparatus shown in FIG.10 is provided with a processing section of transmission system and a processing section of reception system. The sequence of orthogonal multiplexing using block modulation of the processing section of transmission system includes a channel coding section 1001 that performs channel coding on control information, a data modulation section 1002 that performs data modulation on the signal after the channel coding, a DFT section 1003 that applies DFT to the signal after the data modulation, a subcarrier mapping section 1004 that maps the signal after the DFT to subcarriers, an IFFT section 1005 that applies IFFT to the mapped signal, a block spreading section 1006 that performs block spread spectrum modulation on the signal after the IFFT and a CP adding section 1007 that adds a CP to the block-spread signal. Since the channel coding section 1001, data modulation section 1002, DFT section 1003, subcarrier mapping section 1004, IFFT section 1005, block spreading section 1006 and CP adding section 1007 are identical to the channel coding section 801, data modulation section 802, DFT section 803, subcarriermapping section 804, IFFT section 805, block spreading section 806 and CP adding section 807 in Embodiment 2 respectively, detailed descriptions thereof will be omitted.

The sequence of orthogonal multiplexing using a cyclic shift of the processing section of transmission system includes a CAZAC code generation section 1008 that generates a CAZAC code sequence corresponding to a CAZAC number, a block modulation section 1009 that modulates every predetermined number of symbols (block) using the CAZAC code sequence, a subcarrier mapping section 1011 that maps the signal after the block modulation to subcarriers, an IFFT section 1012 that applies IFFT to the mapped signal, a cyclic shift section 1013 that assigns a cyclic shift to the signal after the IFFT and a CP adding section 1014 that adds a CP to the signal assigned the cyclic shift. Since the CAZAC code generation section 1008, block modulation section 1009, subcarrier mapping section 1011, IFFT section1012, cyclic shift section 1013 and CP adding section 1014 are identical to the CAZAC code generation section 601, block modulation section 602, subcarrier mapping section 604, IFFT section 605, cyclic shift section 606 and CP adding section 607 of Embodiment 1 respectively, detailed descriptions thereof will be omitted.

The processing section of reception system includes an OFDM signal receiving section 1015 that receives an OFDM signal, a BCH signal receiving section 1016 that receives a BCH signal, a downlink L1/L2 control signal receiving section 1017 that receives a downlink control signal (L1/L2 control signal), a CQI estimation section 1018 that estimates CQI using reference signals included in the downlink signal, a determining section 1019 that determines whether or not the received downlink shared data channel signal has been received without errors. Since the OFDM receiving section 1015, BCH signal receiving section 1016, downlink L1/L2 control signal receiving section 1017, CQI estimation section 1018 and determining section 1019 are identical to the OFDM receiving section 608, BCH signal receiving section 609, downlink L1/L2 control signal receiving section 610, CQI estimation section 611 and determining section 612 in Embodiment 1 respectively, detailed descriptions thereof will be omitted.

The mobile terminal apparatus is provided with a SW 1020 that switches the processing section of transmission system according to switching information generated based on a delay spread detected by the radio base station apparatus. The switching information as a result of determination of the level of the delay spread in the radio base station apparatus is received with a BCH signal by the mobile terminal apparatus and outputted to the SW 1020. The of transmission system processing section (orthogonally multiplexed sequence using a cyclic shift, orthogonally multiplexed sequence using block spreading) is switched according to this switching information. The processing by the respective processing sections of transmission system is similar to that in Embodiments 1 and 2. Furthermore, this switching information may be reported through a downlink L1/L2 control channel or reported via a higher layer.

Thus, the radio communication method according to the present embodiment can appropriately select an orthogonal multiplexing method with low required receiving power to satisfy the required receiving quality according to the level of the delay spread.

Although a case has been described above where the orthogonal multiplexing method is selected according to the level of the delay spread, the present invention is not limited to this, but is also applicable to a case of switching between the orthogonally multiplexed sequence using a cyclic shift and the orthogonally multiplexed sequence using block spreading according to requirements for the number of multiplexed users. That is, the orthogonally multiplexed sequence using a cyclic shift is selected when the number of multiplexed users exceeds a threshold, while the orthogonally multiplexed sequence using block spreading is selected when the number of multiplexed users is equal to or below the threshold. The radio base station apparatus determines the number of multiplexed users and the determination result is reported to the mobile terminal apparatus as switching information as described above.

The present invention is not limited to the above-described embodiments, and can be implemented with various changes. For example, the number of processing sections and the processing procedure in the above description can be changed as appropriate without departing from the scope of the present invention. Furthermore, the elements illustrated in the drawings represent functions and each function block may be implemented by hardware or by software. In addition, the present invention may be implemented with other various changes as appropriate without departing from the scope of the present invention.

The present application is based on Japanese Patent Application No. 2009-002063 filed on January 7, 2009, entire content of which is expressly incorporated by reference herein.

## Claims

1. A radio base station apparatus comprising:
receiving section configured to receive an uplink control channel signal orthogonally multiplexed among users including reference signals; and
demodulation section configured to demodulate the uplink control channel signal using maximum likelihood detection.

2. The radio base station apparatus according to claim 1, wherein the demodulation section comprises:
channel estimation section configured to obtain a channel estimate value using the reference signals;
replica generating section configured to generate a symbol replica of the control channel signal using the channel estimate value; and
maximum likelihood detection section configured to perform maximum likelihood detection between the symbol replica and symbols of the uplink control channel signal.

3. The radio base station apparatus according to claim 1, wherein the demodulation section comprises:
replica generating section configured to generate a symbol replica of the control channel signal; and
joint maximum likelihood detection section configured to perform channel estimation using the reference signals and perform maximum likelihood detection between the symbol replica and symbols of the uplink control channel signal.

4. The radio base station apparatus according to any one of claims 1 to 3, wherein the uplink control channel signal includes a sub-frame configuration when transmitting channel quality information or a sub-frame configuration when transmitting a retransmission response.

5. The radio base station apparatus according to any one of claims 1 to 4, further comprising separating section configured to separate, when the uplink control channel signal is orthogonally multiplexed by a cyclic shift, the uplink control channel signal according to the cyclic shift on a user-by-user basis.

6. The radio base station apparatus according to any one of claims 1 to 5, further comprising separating section configured to separate, when the uplink control channel signal is orthogonally multiplexed by a block spreading code, the uplink control channel signal according to the block spreading code on a user-by-user basis.

7. The radio base station apparatus according to any one of claims 1 to 6, further comprising switching section configured to switch a separation scheme of an uplink control channel signal orthogonally multiplexed based on a delay spread obtained using the reference signals.

8. A radio communication method comprising:
a transmission step of a mobile terminal apparatus transmitting an uplink control channel signal orthogonally multiplexed among users including reference signals;
a reception step of receiving the uplink control channel signal a radio base station apparatus; and
a demodulation step of demodulating the uplink control channel signal using maximum likelihood detection.

9. The radio communication method according to claim 8, wherein the demodulation step comprises:
a channel estimation step of obtaining a channel estimate value using the reference signals;
a replica generating step of generating a symbol replica of the control channel signal using the channel estimate value; and
a maximum likelihood detection step of performing maximum likelihood detection between the symbol replica and symbols of the uplink control channel signal.

10. The radio communication method according to claim 8, wherein the demodulation step comprises:
a replica generating step of generating a symbol replica of the control channel signal; and
a joint maximum likelihood detection step of performing channel estimation using the reference signals and performing maximum likelihood detection between the symbol replica and the symbols of the uplink control channel signal.

11. The radio communication method according to any one of claims 8 to 10, wherein the uplink control channel signal includes a sub-frame configuration when transmitting channel quality information or a sub-frame configuration when transmitting a retransmission response.

12. The radio communication method according to any one of claims 8 to 11, further comprising a separating step of the radio base station apparatus separating, when the uplink control channel signal is orthogonally multiplexed by a cyclic shift in the mobile terminal apparatus, the uplink control channel signal according to the cyclic shift on a user-by-user basis.

13. The radio communication method according to any one of claims 8 to 12, further comprising a separating step of the radio base station apparatus separating, when the uplink control channel signal is orthogonally multiplexed by a block spreading code in the mobile terminal apparatus , the uplink control channel signal according to the block spreading code on a user-by-user basis.

14. The radio communication method according to any one of claims 8 to 13, further comprising a step of the radio base station apparatus switching a separation scheme of the uplink control channel signal orthogonally multiplexed based on a delay spread obtained using the reference signals.
